# FASCICULE DE BREVET EUROPEEN

(11) **EP 0 474 947 B1**
(45) Date de publication et mention de la délivrance du brevet: **16.02.1994**
(21) Numéro de dépôt: 90402539.2
(22) Date de dépôt: 14.09.1990
(51) Int. Cl.: H02G 15/013, H02G 15/113

(54) **Manchon de protection des câbles électriques et procédé s'y rapportant**
Schutzmuffe für elektrische Kabel und dazugehöriges Verfahren
Protective sleeve for electrical cables and process relating thereto

(43) Date de publication de la demande: 18.03.1992
(73) Titulaire: ETABLISSEMENTS MOREL - ATELIERS ELECTROMECANIQUES DE FAVIERES, F-28170 Chateauneuf-en-Thymerais (FR)
(72) Inventeur: Morel, Jacques, F-28170 Chateauneuf-en-Thymerais (FR); Morel, Didier, F-28170 Chateauneuf-en-Thymerais (FR)
(74) Mandataire: Keib, Gérard

(56) Documents cités:
- EP-A- 0 041 582
- EP-A- 0 206 854
- FR-A- 2 280 992
- FR-A- 2 649 838
- US-A- 3 254 153
- US-A- 4 061 872

## Description

La présente invention concerne un manchon pour protéger les épissures de raccordement de câbles électriques multifilaires.

On connaît notamment selon le brevet français n° 2 582 854 de la demanderesse, un manchon comprenant deux demi-coquilles assemblées par leurs bords longitudinaux, autour d'un câble principal s'étendant axialement à l'intérieur du manchon, ce manchon comportant à ses extrémités, des mâchoires serrant axialement ledit câble principal, chaque mâchoire étant formée de deux éléments de mâchoire en matière plastique retenus dans un support de mâchoire calé axialement dans l'extrémité correspondante du manchon.

Un tel manchon permet d'obtenir une excellente étanchéité vis-à-vis du câble électrique.

Dans certains cas, on peut être amené à faire passer à l'intérieur du manchon un ou plusieurs câbles de dérivation. A cet effet, chaque support de mâchoire peut comporter au moins une ouverture pour le passage d'un câble de dérivation s'étendant parallèlement au câble principal.

Le but de la présente invention est de réaliser des passages pour un ou plusieurs câbles de dérivation qui permettent d'obtenir une excellente étanchéité pour ces câbles de dérivation à l'aide de moyens à la fois efficaces, de construction simple et aisés à mettre en oeuvre.

Suivant l'invention, le manchon du type précité est caractérisé en ce qu'à chaque extrémité du manchon est prévu un support de mâchoire dont l'ouverture de passage du câble de dérivation est prolongée axialement par un élément creux allongé présentant une surface extérieure tronconique dont la section décroît vers son extrémité libre et une surface intérieure tronconique dans le prolongement de l'ouverture de passage du câble qui est également tronconique, en ce que cet élément creux allongé est engagé dans une ouverture tronconique ménagée dans un autre support de mâchoire qui épouse la surface extérieure tronconique dudit élément, en ce que le câble de dérivation est retenu dans l'ouverture tronconique du premier support de mâchoire par des moyens de calage engagés axialement dans ladite ouverture tronconique et serrant radialement ledit câble et en ce qu'un produit d'étanchéité est disposé entre le câble et l'élément creux allongé dans la zone adjacente à l'autre support de mâchoire.

Les moyens de calage engagés dans l'ouverture tronconique du support de mâchoire serrent radialement le câble et assurent ainsi une excellente fixation axiale du câble au support précité.

Par ailleurs, le produit d'étanchéité disposé entre le câble et l'élément creux allongé assure une excellente étanchéité.

Selon une version avantageuse de l'invention, lesdits moyens de calage engagés axialement dans l'ouverture tronconique du support de mâchoire comprennent une bague en deux parties entourant le câble et dont la surface extérieure tronconique épouse celle de l'ouverture du support de mâchoire, la surface intérieure desdites parties de la bague présentant des dents de retenue axiale du câble.

De préférence, le produit d'étanchéité disposé entre le câble et l'élément creux allongé est une bande de mastic enroulée autour du câble.

Cette bande de mastic est disposée dans un espace annulaire délimité par deux surfaces tronconiques, de sorte que lorsqu'on tire sur le câble, cette bande est forcée entre ces deux surfaces tronconiques qui forment un coin, ce qui comprime radialement le mastic et assure une excellente étanchéité.

Selon un autre aspect de l'invention, le procédé pour fixer un ou plusieurs câbles de dérivation dans le manchon selon l'invention est caractérisé par les étapes suivantes :
- on engage le ou les éléments creux allongés de l'un des supports de mâchoire dans la ou les ouvertures tronconiques correspondantes de l'autre support de mâchoire,
- on applique sur le ou les câbles un produit d'étanchéité sur une zone dont la longueur est au moins égale à la longueur axiale de l'ouverture tronconique dudit autre support de mâchoire,
- on enfile chaque câble dans un élément creux allongé engagé dans une ouverture de l'autre support de mâchoire,
- on tire sur chaque câble de façon à forcer le produit d'étanchéité dans l'espace annulaire compris entre le câble et la partie de l'élément allongé qui est engagée dans l'ouverture tronconique de l'autre support de mâchoire,
- on engage la bague de calage dans l'espace annulaire compris entre le câble et l'ouverture tronconique du premier support de mâchoire, et
- on tire à nouveau sur le câble pour forcer l'engagement de ladite bague de calage dans ladite ouverture.

D'autres particularités et avantages de l'invention apparaîtront encore dans la description ci-après.

Aux dessins annexés donnés à titre d'exemples non limitatifs :
- la figure 1 est une vue en coupe longitudinale avec arrachements d'un manchon conforme à l'invention,
- la figure 2 est une vue en bout suivant la flèche F de la figure 1,
- la figure 3 est une vue en coupe suivant le plan III-III de la figure 2,
- les figures 4 à 7 illustrent les étapes successives du procédé conforme à l'invention.

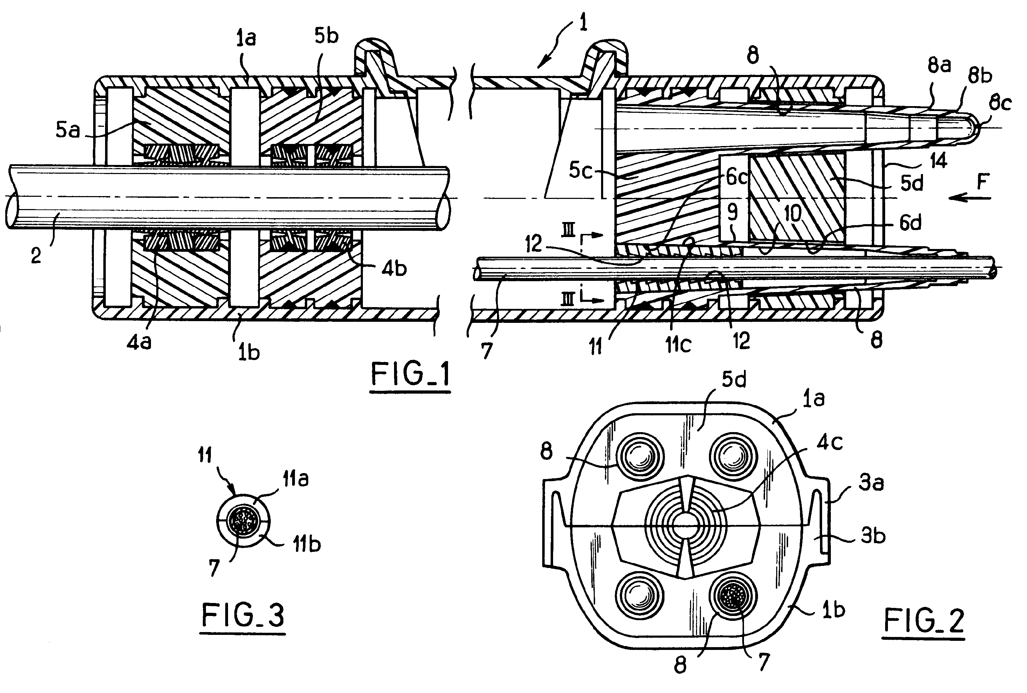

Dans la réalisation des figures 1 et 2, le manchon 1 pour protéger les épissures de raccordement des extrémités de câbles électriques 2, comprend deux demi-coquilles 1a, 1b assemblées par leurs bords longitudinaux 3a, 3b (voir figure 2), autour d'un câble principal 2 s'étendant axialement à l'intérieur du manchon. Ce manchon 1 comporte à ses extrémités des mâchoires telles que 4a, 4b, 4c serrant axialement le câble principal 2. Chaque mâchoire 4a, 4b, 4c est formée de deux éléments de mâchoire en matière plastique retenus dans un support de mâchoire 5a, 5b, 5c, 5d calé axialement dans l'extrémité correspondante du manchon. Chaque support de mâchoire tel que 5c, 5d comporte plusieurs ouvertures telles que 6c, 6d pour le passage d'un câble de dérivation 7 s'étendant parallèlement au câble principal 2. Un tel manchon est décrit dans le brevet français n° 2 582 854 de la demanderesse.

Conformément à l'invention, à chaque extrémité du manchon 1 est prévu un support de mâchoire 5c dont l'ouverture 6c de passage du câble de dérivation 7 est prolongée axialement par un élément creux allongé 8 présentant une surface extérieure tronconique 9 dont la section décroît vers son extrémités libre et une surface intérieure tronconique 10 dans le prolongement de l'ouverture 6c de passage du câble 7 qui est également tronconique. Cet élément creux allongé 8 est engagé dans une ouverture tronconique 6d ménagée dans un autre support de mâchoire 5d qui épouse la surface extérieure tronconique 9 dudit élément 8.

Le câble de dérivation 7 est retenu dans l'ouverture tronconique 6c du premier support de mâchoire 5c par des moyens de calage 11 engagés axialement dans ladite ouverture tronconique 6c et serrant radialement le câble 7.

Par ailleurs, comme on le verra plus loin, un produit d'étanchéité est disposé entre le câble 7 et l'élément creux allongé 8 dans la zone adjacente à l'autre support de mâchoire 5d.

Dans l'exemple représenté, les moyens de calage engagés axialement dans l'ouverture tronconique 6c du support de mâchoire 5c comprennent une bague 11 en deux parties 11a, 11b (voir figure 3) symétriques par rapport à son axe.

Cette bague 11 entoure le câble 7 et sa surface extérieure tronconique 11c épouse celle de l'ouverture 6c du support de mâchoire. La surface intérieure desdites parties 11a, 11b de la bague 11 présente des dents 12 de retenue axiale du câble 7.

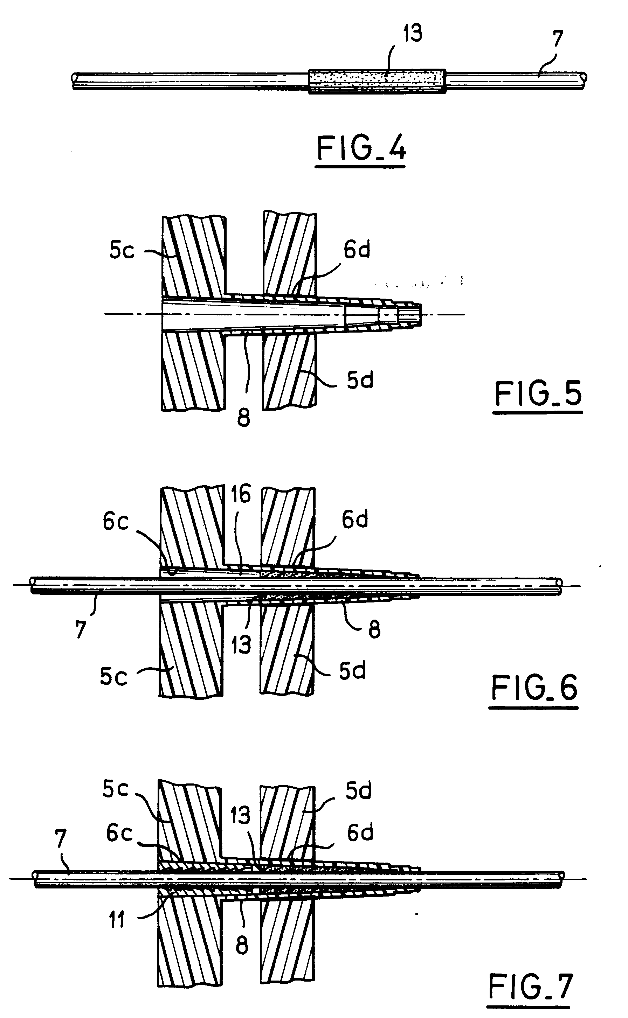

Par ailleurs, le produit d'étanchéité disposé entre le câble 7 et l'élément creux allongé 8 est une bande de mastic 13 enroulée autour du câble 7 (voir figure 4).

On voit d'autre part sur la figure 1 que l'élément allongé creux 8 fait saillie hors de la face terminale 14 de l'extrémité du manchon 1.

Cet élément allongé creux 8 est en matière plastique découpable par un outil tranchant.

Cet élément allongé creux 8 comporte à cet effet sur sa partie en saillie hors de l'extrémité du manchon 1 des repères annulaires 8a, 8b espacés axialement permettant de couper cet élément pour adapter son diamètre intérieur à celui du câble 7.

Par ailleurs, l'extrémité libre 8c de l'élément allongé 8 est fermée, pour assurer l'étanchéité lorsqu'il n'est pas traversé par un câble.

Le procédé pour fixer un ou plusieurs câbles de dérivation 7 dans un manchon 1 conforme à l'invention, comprend les étapes suivantes :
- on coupe l'extrémité de l'élément creux 8 de façon à adapter son diamètre intérieur à celui du câble 7 que l'on veut utiliser ; cette adaptation est possible grâce au fait que la surface intérieure de l'élément allongé 8 est tronconique ;
- on engage le ou les éléments creux allongés 8 de l'un 5c des supports de mâchoire dans la ou les ouvertures tronconiques correspondantes 6d de l'autre support de mâchoire 5d (voir figure 5) ;
- on applique sur le ou les câbles 7 un produit d'étanchéité tel qu'une bande de mastic 11 enroulée sur une zone dont la longueur est au moins égale à la longueur axiale de l'ouverture tronconique 6d dudit autre support de mâchoire 5d ;
- on enfile chaque câble 7 dans un élément creux allongé 8 engagé dans une ouverture 6d de l'autre support de mâchoire 5d ;
- on tire sur chaque câble 7 de façon à forcer le produit d'étanchéité c'est-à-dire le mastic (13) dans l'espace annulaire 16 compris entre le câble 7 et la partie de l'élément allongé 8 qui est engagée dans l'ouverture tronconique 6d de l'autre support de mâchoire 5d (voir figure 6) ;
- on engage la bague de calage 11 dans l'espace annulaire 16 compris entre le câble 7 et l'ouverture tronconique 6c du premier support de mâchoire 5c; et
- on tire à nouveau sur le câble 7 pour forcer l'engagement de la bague de calage 11 dans l'ouverture 6c.

Il suffit ensuite de fermer le manchon. L'étanchéité du câble 7 est ainsi assurée par le mastic 13 qui a été comprimé radialement et étiré axialement dans l'espace compris entre le câble 7 et la surface intérieure tronconique de l'élément creux allongé 8.

Par ailleurs, la retenue axiale du câble 7 par rapport aux supports de mâchoire 5c, 5d est assurée d'une manière excellente grâce à l'engagement à force de la bague de calage 11 dans l'ouverture tronconique 6c du premier support de mâchoire 5c et aux dents 12 de la bague 11 venant en prise avec la gaine en matière plastique souple du câble 7.

## Revendications

1. Manchon (1) pour protéger les épissures de câbles électriques (2), comprenant deux demi-coquilles (1a, 1b) assemblées par leurs bords longitudinaux, autour d'un câble principal (2) s'étendant axialement à l'intérieur du manchon, ce manchon (1) comportant à ses extrémités des mâchoires (4a, 4b) serrant axialement ledit câble principal (2), chaque mâchoire étant formée de deux éléments de mâchoire en matière plastique retenus dans un support de mâchoire (5a, 5b, 5c, 5d) calé axialement dans l'extrémité correspondante du manchon, chaque support de mâchoire comportant au moins une ouverture (6c, 6d) pour le passage d'un câble de dérivation (7) s'étendant parallèlement au câble principal (2), caractérisé en ce qu'à chaque extrémité du manchon (1) est prévu un support de mâchoire (5c) dont l'ouverture de passage (6c) du câble de dérivation (7) est prolongée axialement par un élément creux allongé (8) présentant une surface extérieure tronconique (9) dont la section décroît vers son extrémité libre et une surface intérieure tronconique (10) dans le prolongement de l'ouverture de passage (6c) du câble (7) qui est également tronconique, en ce que cet élément creux allongé (8) est engagé dans une ouverture tronconique (6d) ménagée dans un autre support de mâchoire (5d) qui épouse la surface extérieure tronconique (9) dudit élément (8), en ce que le câble de dérivation (7) est retenu dans l'ouverture tronconique (6c) du premier support de mâchoire (5c) par des moyens de calage (11) engagés axialement dans ladite ouverture tronconique (6c) et serrant radialement ledit câble (7) et en ce qu'un produit d'étanchéité (13) est disposé entre le câble (7) et l'élément creux allongé (8) dans la zone adjacente à l'autre support de mâchoire (5d).

2. Manchon conforme à la revendication 1, caractérisé en ce que lesdits moyens de calage engagés axialement dans l'ouverture tronconique (6c) du support de mâchoire (5c) comprennent une bague en deux parties (11a, 11b) entourant le câble (7) et dont la surface extérieure tronconique épouse celle de l'ouverture (6c) du support de mâchoire (5c), la surface intérieure desdites parties (11a, 11b) de la bague présentant des dents (12) de retenue axiale du câble.

3. Manchon conforme à la revendication 2, caractérisé en ce que les deux parties (11a, 11b) de la bague (11) sont symétriques par rapport à son axe.

4. Manchon conforme à l'une des revendications 1 à 3, caractérisé en ce que le produit d'étanchéité disposé entre le câble (7) et l'élément creux allongé (8) est une bande de mastic (13) enroulée autour du câble.

5. Manchon conforme à l'une des revendications 1 à 4, caractérisé en ce que l'élément allongé creux (8) fait saillie hors de la face terminale (14) de l'extrémité du manchon (1).

6. Manchon conforme à l'une des revendications 1 à 5, caractérisé en ce que l'élément allongé (8) est en matière plastique découpable par un outil tranchant.

7. Manchon conforme à la revendication 6, caractérisé en ce que l'élément allongé (8) comporte sur sa partie en saillie hors de l'extrémité du manchon (1) des repères annulaires (8a, 8b) espacés axialement permettant de couper cet élément (8) pour adapter son diamètre intérieur à celui du câble (7).

8. Manchon conforme à l'une des revendications 1 à 7, caractérisé en ce que l'extrémité libre (8c) de l'élément allongé (8) est fermée.

9. Procédé pour fixer un ou plusieurs câbles de dérivation (7) dans un manchon (1) conforme à l'une des revendications 1 à 8, caractérisé par les étapes suivantes :
- on engage le ou les éléments creux (8) allongés de l'un (5c) des supports de mâchoire dans la ou les ouvertures tronconiques correspondantes (6d) de l'autre support de mâchoire (5d),
- on applique sur le ou les câbles (7) un produit d'étanchéité (13) sur une zone dont la longueur est au moins égale à la longueur axiale de l'ouverture tronconique (6d) dudit autre support de mâchoire,
- on enfile chaque câble (7) dans un élément creux allongé (8) engagé dans une ouverture (6d) de l'autre support de mâchoire (5d),
- on tire sur chaque câble (7) de façon à forcer le produit d'étanchéité (13) dans l'espace annulaire compris entre le câble (7) et la partie de l'élément allongé (8) qui est engagée dans l'ouverture tronconique (6d) de l'autre support de mâchoire (5d),
- on engage la bague de calage (11) dans l'espace annulaire compris entre le câble (7) et l'ouverture tronconique (6c) du premier support de mâchoire (5c), et
- on tire à nouveau sur le câble (7) pour forcer l'engagement de ladite bague de calage (11) dans ladite ouverture (6c).

## Patentansprüche

1. Muffe (1) zum Schutz der Spleißstellen von elektrischen Kabeln (2), mit zwei Halbschalen (1a, 1b), die an ihren Längsrändern um ein Hauptkabel (2) zusammengesetzt sind, das sich axial im Inneren der Muffe erstreckt, wobei diese Muffe (1) an ihren Enden Backen (4a, 4b) aufweist, die das Hauptkabel (2) axial einklemmen, wobei jede Backe aus zwei Backenelementen aus Kunststoff geformt ist, die in einer Backenstütze (5a, 5b, 5c, 5d) gehalten sind, die axial in dem entsprechenden Ende der Muffe verkeilt ist, wobei jede Backenstütze wenigstens eine Öffnung (6c, 6d) für den Durchgang eines Abzweigkabels (7) aufweist, das sich parallel zu dem Hauptkabel (2) erstreckt, dadurch gekennzeichnet, daß an jedem Ende der Muffe (1) eine Backenstütze (5c) vorgesehen ist, deren Durchgangsöffnung (6c) für das Abzweigkabel (7) axial durch ein hohles, langgestrecktes Element (8) verlängert ist, das eine kegelstumpfförmige Außenfläche (9) aufweist, deren Querschnitt zu ihrem freien Ende hin abnimmt, sowie eine kegelstumpfförmige Innenfläche (10) in der Verlängerung der Durchgangsöffnung (6c) für das Kabel (7), die ebenfalls kegelstumpfförmig ist, daß dieses hohle, langgestreckte Element (8) mit einer kegelstumpfförmigen Öffnung (6d) in Eingriff steht, die in einer weiteren Backenstütze (5d) ausgebildet ist, die an der kegelstumpfförmigen Außenfläche des Elements (8) anliegt, daß das Abzweigkabel (7) in der kegelstumpfförmigen Öffnung (6c) der ersten Backenstütze (5c) durch Verkeilmittel (11) gehalten wird, die axial in die kegelstumpfförmige Öffnung (6c) eingesetzt sind und das Kabel (7) radial einklemmen, und daß ein Dichtungsmittel (13) zwischen dem Kabel (7) und dem hohlen, langgestreckten Element (8) in der an die andere Backenstütze (5d) angrenzenden Zone vorgesehen ist.

2. Muffe nach Anspruch 1, dadurch gekennzeichnet, daß die Verkeilmittel, die in die kegelstumpfförmige Öffnung (6c) der Backenstütze (5c) eingesetzt sind, einen Ring aus zwei Teilen (lla, llb) aufweisen, der das Kabel (7) umgibt und dessen kegelstumpfförmige Außenfläche an der Fläche der Öffnung (6c) der Backenstütze (5c) anliegt, wobei die Innenfläche der Teile (lla, llb) des Rings Zähne (12) zum axialen Halten des Kabels aufweist.

3. Muffe nach Anspruch 2, dadurch gekennzeichnet, daß die zwei Teile (11a, 11b) des Rings (11) bezüglich seiner Achse symmetrisch sind.

4. Muffe nach einem der Ansprüche 1 bis 3, dadurch gekennzeichnet, daß das zwischen dem Kabel (7) und dem hohlen, langgestreckten Element (8) vorgesehene Dichtungsmittel ein um das Kabel gewickeltes Mastixband (13) ist.

5. Muffe nach einem der Ansprüche 1 bis 4, dadurch gekennzeichnet, daß das langgestreckte Element (8) über die Endfläche (14) des Endes der Muffe (1) hinausragt.

6. Muffe nach einem der Ansprüche 1 bis 5, dadurch gekennzeichnet, daß das langgestreckte Element (8) aus Kunststoff besteht, der mit einem Schneidwerkzeug abgeschnitten werden kann.

7. Muffe nach Anspruch 6, dadurch gekennzeichnet, daß das langgestreckte Element (8) an seinem Teil, der über das Ende der Muffe (1) hinausragt, axial im Abstand angeordnete, ringförmige Markierungen (8a, 8b) aufweist, die es ermöglichen, dieses Element (8) abzuschneiden, um seinen Innendurchmesser an den des Kabels (7) anzupassen.

8. Muffe nach einem der Ansprüche 1 bis 7, dadurch gekennzeichnet, daß das freie Ende (8c) des langgestreckten Elements (8) geschlossen ist.

9. Verfahren zum Befestigen eines oder mehrerer Abzweigkabel (7) in einer Muffe (1) nach einem der Ansprüche 1 bis 8, gekennzeichnet durch die folgenden Schritte:
- das oder die hohlen, langgestreckten Elemente (8) der einen Backenstütze (5c) werden mit der oder den entsprechenden, kegelförmigen Öffnungen (6d) der anderen Backenstütze (5d) in Eingriff gebracht,
- auf das oder die Kabel (7) wird über eine Zone, deren Länge wenigstens gleich der axialen Länge der kegelstumpfförmigen Öffnung (6d) der anderen Backenstütze ist, ein Dichtungsmittel (13) aufgebracht,
- jedes Kabel (7) wird in ein hohles, langgestrecktes Element (8), das mit einer Öffnung (6d) der anderen Backenstütze (5d) in Eingriff steht, eingeführt,
- an jedem Kabel (7) wird so gezogen, daß das Dichtungsmittel (13) in den ringförmigen Raum zwischen dem Kabel (7) und dem Teil des langgestrecken Elements (8) gezwungen wird, der mit der kegelstumpfförmigen Öffnung (6d) der anderen Backenstütze (5) in Eingriff steht,
- der Verkeilring (11) wird in den ringförmigen Raum zwischen dem Kabel (7) der kegelstumpfförmigen Öffnung (6c) der ersten Backenstütze (5c) eingesetzt, und
- an dem Kabel (7) wird erneut gezogen, um den Eingriff des Verkeilrings (11) mit der Öffnung (6c) zu erzwingen.

## Claims

1. A sleeve (1) for protecting splices of electric cables (2) and comprising two half-shells (1a, 1b) fitted via their longitudinal edges around a main cable (2) axially extending in the sleeve, the sleeve (1) ending in jaws (4a, 4b) axially gripping the main cable (2), each jaw being made up of two plastics components held in a holder (5a, 5b, 5c, 5d) axially fastened in the corresponding end of the sleeve, each jaw holder having at least one opening (6c, 6d) for a branch cable (7) extending parallel to the main cable (2), characterised in that a jaw holder (5c) is provided at each end of the sleeve (1) and has an opening (6c) for the branch cable (7), the opening being axially prolonged by an elongate hollow component (8) having a frusto-conical outer surface (9) decreasing in cross-section towards its projecting end and a frusto-conical inner surface (10) in line with the opening (6c) for the cable (7) and likewise frusto-conical, the elongate hollow component (8) engages in a frusto-conical opening (6d) formed in another jaw holder (5d) which intimately follows the frusto-conical outer surface (9) of the component (8), the branch cable (7) is retained in the frusto-conical opening (6c) in the first jaw support (5c) by fastening means (11) which axially engage in the frusto-conical opening (6c) and radially clamp the cable (7), and a sealing substance (13) is disposed between the cable (7) and the elongate hollow component (8) in the zone adjacent the other jaw holder (5d).

2. A sleeve according to claim 1, characterised in that the fastening means, which axially engage in the frusto-conical opening (6c) in the jaw holder (5c), comprise a ring in two parts (11a, 11b) surrounding the cable (7) and having a frusto-conical outer surface which intimately follows the surface of the opening (6c) in the jaw holder (5c), the inner surface of the parts (11a, 11b) of the ring having teeth (12) for axially retaining the cable.

3. A sleeve according to claim 2, characterised in that the two parts (11a, 11b) of the ring (11) are symmetrical with respect to its axis.

4. A sleeve according to any of claims 1 to 3, characterised in that the sealing substance disposed between the cable (7) and the elongate hollow component (8) is a strip of putty (13) wound round the cable.

5. A sleeve according to any of claims 1 to 4, characterised in that the hollow elongate component (8) projects from the end face (14) of the end of the sleeve (1).

6. A sleeve according to any of claims 1 to 5, characterised in that the elongate component (8) is made of plastics which can be cut by a cutting tool.

7. A sleeve according to claim 6, characterised in that the parts of the elongate component (8) projecting beyond the end of the sleeve (1) have annular marks (8a, 8b) axially spaced so that the component (8) can be cut to adapt its inner diameter to that of the cable (7).

8. A sleeve according to any of claim 1 to 7, characterised in that the free end (8c) of the elongate component (8) is closed.

9. A method of securing one or more branch cables (7) in a sleeve (1) according to any of claims 1 to 8, characterised by the following steps:
- the hollow elongate component or components (8) of one (5c) jaw holder are engaged in the corresponding frusto-conical opening or openings in the other jaw holder (5d),
- a sealing substance (13) is applied to the cable or cables (7) along a zone at least equal in length to the axial length of the frusto-conical opening (6d) in the other jaw holder,
- each cable (7) is inserted into an elongate hollow component (8) engaging in an opening (6d) in the other jaw holder (5d),
- each cable (7) is pulled so as to force the sealing substance (13) into the annular space between the cable (7) and that part of the elongate component (8) which engages in the frusto-conical opening (6d) in the other jaw holder (5d),
- the fastening ring (11) is engaged in the annular space between the cable (7) and the frusto-conical opening (6c) in the first jaw holder (5c), and
- the cable (7) is again pulled in order forcibly to engage the fastening ring (11) in the opening (6c).
